(19) Europäisches Patentamt

European Patent Office

Office européen des brevets

(11) **EP 3 227 709 B1**

(12) # EUROPÄISCHE PATENTSCHRIFT

(45) Veröffentlichungstag und Bekanntmachung des Hinweises auf die Patenterteilung:
**19.02.2020 Patentblatt 2020/08**

(21) Anmeldenummer: **15801399.5**

(22) Anmeldetag: **25.11.2015**

(51) Int Cl.:
*G01S 5/02* (2010.01) *G01S 5/12* (2006.01)
*H04W 84/18* (2009.01) *H04L 5/00* (2006.01)
*H04L 27/26* (2006.01)

(86) Internationale Anmeldenummer:
**PCT/EP2015/077688**

(87) Internationale Veröffentlichungsnummer:
**WO 2016/087287 (09.06.2016 Gazette 2016/23)**

(54) **POSITIONSBESTIMMUNG VON SENSORKNOTEN EINES SENSORNETZWERKES**

DETERMINING THE POSITION OF SENSOR NODES OF A SENSOR NETWORK

DÉTERMINATION DE LA POSITION DE NOEUDS DE CAPTEURS D'UN RÉSEAU DE CAPTEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2014 DE 102014224797**

(43) Veröffentlichungstag der Anmeldung:
**11.10.2017 Patentblatt 2017/41**

(73) Patentinhaber:
• **Fraunhofer Gesellschaft zur Förderung der angewandten Forschung E.V.**
**80686 München (DE)**
• **Friedrich-Alexander-Universität Erlangen-Nürnberg**
**91054 Erlangen (DE)**

(72) Erfinder:
• **FRANKE, Norbert**
**91058 Erlangen (DE)**
• **KILIAN, Gerd**
**91056 Erlangen (DE)**

• **FORSTER, Christian**
**90403 Nürnberg (DE)**
• **TRÖGER, Hans-Martin**
**91054 Erlangen (DE)**
• **THIELECKE, Jörn**
**91056 Erlangen (DE)**
• **ROBERT, Jörg**
**91080 Uttenreuth (DE)**
• **HARTMANN, Markus**
**92237 Sulzbach-Rosenberg (DE)**

(74) Vertreter: **Pfenning, Meinig & Partner mbB Patent- und Rechtsanwälte Joachimsthaler Straße 10-12 10719 Berlin (DE)**

(56) Entgegenhaltungen:
WO-A1-2011/120213   WO-A2-03/041388
US-A1- 2005 286 611   US-A1- 2013 070 751
US-B1- 8 063 825

## Beschreibung

Die Erfindung betrifft ein Verfahren zur Bestimmung der Position von Sensorknoten eines Sensorknotennetzes nach dem Oberbegriff des Hauptanspruchs und ein System mit einem Sensornetzwerk und mindestens zwei Sendern zur Durchführung des Verfahrens.

Sensornetzwerke zur Erfassung von Sensordaten einer Vielzahl von Sensoren werden für eine Vielzahl von Anwendungszwecken eingesetzt. Beispielsweise können Zählerstände von Strom-, Gas- oder Wasserzählern durch Sensoren erfasst werden, die kommunikativ mit anderen Sensoren und/oder einem anderen Knoten wie einem Server zur Übermittelung ihrer Sensordaten verbunden sind. Ein Sensor mit einer Kommunikationseinheit zur Übermittelung der Sensordaten und gegebenenfalls weiterer Daten wird hier als Sensorknoten bezeichnet.

Eine Vielzahl von solchen Sensorknoten bildet ein Sensornetzwerk. Dabei können die Sensorknoten innerhalb des Sensornetzwerkes auf verschiedenste Art und Weise direkt oder indirekt kommunikativ miteinander verbunden sein. Ebenso können die Sensorknoten des Sensornetzwerkes direkt oder indirekt kommunikativ mit einem anderen Knoten wie einem Server verbunden sein.

Für die Auswertung der Sensordaten eines solchen Sensornetzwerkes ist häufig die Kenntnis der Position der einzelnen Sensorknoten innerhalb des Sensornetzwerkes von Bedeutung, um beispielsweise die Sensordaten einer bestimmten Position zuzuordnen. Dazu können beispielsweise die Positionen der Sensorknoten des Sensornetzwerkes relativ zueinander oder mit Bezug auf ein Referenzkoordinatensystem bestimmt werden. Wünschenswert ist dabei eine hohe Genauigkeit der Positionsbestimmung, die im Bereich von Dezimetern liegen sollte.

Die Bestimmung der Positionen einer Vielzahl von Sensorknoten eines Sensornetzwerkes ist mit einem hohen Aufwand verbunden. Beispielsweise können die Positionen der Sensorstandorte in einer Karte bestimmt werden. Neben dem hohen manuellen Aufwand hat dieses Verfahren den Nachteil einer begrenzten Genauigkeit, da die Genauigkeit der Positionsbestimmung direkt von der Verfügbarkeit entsprechend genauer Karten abhängt. Eine weitere Möglichkeit bieten Verfahren zur automatischen Positionsbestimmung mittels Funknavigationsverfahren, wie zum Beispiel mittels des satellitengestützten GPS-Systems. Diese Verfahren erfordern aber einen speziellen Empfänger in jedem Sensorknoten, der zusätzliche Hardwarekosten verursacht. Zudem ist bei Nutzung von GPS die Bestimmung einer Position mit einer Abweichung von kleiner als 5 Metern nur mit dem D-GPS Verfahren möglich. Die Nutzung von D-GPS ist aber mit zusätzlichem Aufwand verbunden, da ein Referenzempfänger in geographischer Nähe des Sensornetzwerkes erforderlich ist. Außerdem bedingen GPS basierte Positionsbestimmungsverfahren eine Sichtverbindung vom Empfangsstandort zu den Satelliten, die beispielsweise innerhalb von Gebäuden nicht gegeben ist.

Ein auch für Indoor-Anwendungen geeignetes Verfahren zur Positionsbestimmung beruht auf der Verwendung von sogenannten "Signals of Opportunity". Als Signal of Opportunity werden Funksignale bezeichnet, die zu einem anderen Zweck als zur Positionsbestimmung abgestrahlt werden. Als Signal of Opportunity können Funksignale verwendet werden, deren Eigenschaften eine Positionsbestimmung mit der geforderten Genauigkeit ermöglichen.

Als Signal of Opportunity sind beispielsweise Fernseh- oder Rundfunksignale (DVB-T, DAB) oder auch Signale von Kommunikationsnetzen (GSM, UMTS, LTE) geeignet. Diese Signale werden üblicherweise innerhalb eines geographischen Gebietes von mehreren unterschiedlichen Standorten mit hoher Sendeleistung und Bandbreite abgestrahlt und können auch in Gebäuden ohne Sichtverbindung zum Sender mit einem guten Signal-zu-Rauschverhältnis empfangen werden. Außerdem weisen diese Signale Merkmale auf, wie eine hohe Frequenzstabilität und charakteristische Signalsequenzen, die die Bestimmung der Position mit Hilfe dieser Signale ermöglichen.

Die Positionsbestimmung mittels Signals of Opportunity basiert auf der Bestimmung der Signallaufzeiten der Sendesignale von mehreren Sendern mit bekannten Standorten und dem Empfänger an einem unbekannten Standort.

Ein solches Verfahren wurde beispielsweise im Patent US 6,861,984 B2 veröffentlicht. Nachteilig bei diesem Verfahren ist, dass die Position der Senderstandorte bekannt sein muss. Nachteilig ist ebenfalls, dass spezielle Empfangsstationen an bekannten Standorten erforderlich sind, beispielsweise um den Einfluss des Atmosphärenzustandes auf die Signallaufzeit zu bestimmen und für die Positionsbestimmung zu berücksichtigen. Zudem liegt die erreichbare Genauigkeit der Positionsbestimmung nur bei etwa einem Meter.

Das Patent US 8,063,825 B1 offenbart ein Verfahren, welches auf der Bestimmung der Signallaufzeitdifferenz der von zwei Empfängern empfangenen Signals of Opportunity basiert. Nachteilig bei diesem Verfahren ist die notwendige Bestimmung des Offset der Zeitbasen der Empfänger.

Der vorliegenden Erfindung liegt vor dem Hintergrund des Standes der Technik die Aufgabe zugrunde, ein Verfahren zur Positionsbestimmung der Sensorknoten eines Sensornetzwerkes anzugeben, dass eine verbesserte Genauigkeit der Positionsbestimmung ermöglicht und einfacher zu realisieren ist.

Die Aufgabe wird mit dem Verfahren gemäß Patentanspruch 1 gelöst. Die weiteren Patentansprüche geben vorteilhafte Ausgestaltungen des erfindungsgemäßen Verfahrens an.

Es wird ein Verfahren zur Bestimmung der Position eines ersten relativ zu einem zweiten Sensorknoten angegeben, das auf der Messung der Laufzeitdifferenz der Signals of Opportunity zwischen der Ankunft am ersten und der Ankunft am zweiten Sensorknoten und der Ermittlung des Einfallswinkel der Signals of Opportunity am Sensorknoten basiert. Die Messung der Laufzeitdifferenz hat den Vorteil, dass die Messung im Vergleich mit bekannten Verfahren mit höherer Genauigkeit erfolgen kann und dass der Einfluss atmosphärischer Bedingungen auf die Messung minimiert wird. Da für die Bestimmung der Position der Sensorknoten nur Signallaufzeit der Signals of Opportunity zwischen den Sensorknoten und deren Einfallswinkel zu den Sensorknoten bestimmt werden muss, ist eine Kenntnis der Position des Standortes der Sender des Signals of Opportunity zur Positionsbestimmung nicht erforderlich.

Das Sensornetzwerk und mindestens ein Sender, der ein Signal of Opportunity abstrahlt, bilden dann ein System, in dem die Position der Sensorknoten bestimmt werden kann.

Ein Aspekt der vorliegenden Erfindung betrifft ein Verfahren zur Bestimmung der Position eines ersten Sensorknotens relativ zu einem zweiten Sensorknoten, wobei der erste und der zweite Sensorknoten kommunikativ miteinander verbunden sind und Bestandteil eines Sensornetzwerkes sind, mit den Verfahrensschritten:

- Empfang von Signalabschnitten von Sendesignalen zumindest zweier Sender durch den ersten und den zweiten Sensorknoten, beginnend zu einem Zeitpunkt $t_1$ für eine Zeitdauer $t_{RX}$;
- Bestimmung der Einfallswinkel der Sendesignale zu zumindest einem der Sensorknoten;
- Bestimmung der Entfernung zwischen den Sensorknoten aus den Laufzeitdifferenzen der an dem ersten und zweiten Sensorknoten empfangenen Sendesignale der zumindest zweier Sender;
- Bestimmung der Position des ersten Sensorknotens relativ zum zweiten Sensorknoten aus der Entfernung zwischen den Sensorknoten und dem Einfallswinkel der Sendesignale,

wobei die Sensorknoten den Zeitpunkt $t_1$ und die Zeitdauer $t_{RX}$ in Bezug auf eine Referenzfrequenz bestimmen, die aus dem empfangenen Sendesignal zumindest eines der Sender abgeleitet wird.

In einer Fortbildung des Verfahrens sind die Sender ausgebildet, ein OFDM moduliertes Sendesignal abzustrahlen. Die Sensorknoten sind ausgebildet ein OFDM moduliertes Signal zu empfangen. Ein OFDM moduliertes Signal ermöglicht in vorteilhafter Weise eine einfache Bestimmung einer hochgenauen Referenzfrequenz aus dem Sendesignal. Insbesondere Signale von Sendern, die DVB-T oder auch LTE Signale abstrahlen sind besonders geeignet, da die Sendesignale basierend auf einer hochgenauen Referenzfrequenz generiert werden.

Die Sensorknoten sind dann ausgebildet, die Referenzfrequenz mittels eines aus dem OFDM modulierten Sendesignals jeweils gewonnenen Korrektursignals zu bestimmen.

Das Korrektursignal kann durch die Sensorknoten durch einen Phasenvergleich von zumindest zwei Einzelträgern des Sendesignals bestimmt werden. Der Phasenvergleich beinhaltet die Auswertung einer Phasendifferenz, einen Phasenvergleich eines Einzelträgers des Sendesignals mit einem unmittelbar zuvor empfangenen Einzelträger des Sendesignals, oder einen Vergleich des Sendesignals mit einem Signal, dass durch Modulation des demodulierten Sendesignals generiert wurde. Eine Phasendifferenz kann beispielsweise als Differenz der Phasen zweier aufeinanderfolgender Symbole bestimmt werden oder im Bezug des aktuell empfangenen Symbols auf ein statisches Referenzsymbol.

Durch eine Mittelung von über einen längeren Zeitraum bestimmten Korrektursignalen kann eine höhere Genauigkeit erreicht werden.

Die Laufzeitdifferenz kann als das Maximum der Autokorrelationsfunktion der vom ersten und zweiten Sensorknoten empfangenen Signalabschnitte des Sendesignals bestimmt werden. Mittels der Autokorrelationsfunktion von zwei zu einem unterschiedlichen Zeitpunkt empfangenen Signalen kann in vorteilhafter Weise die Laufzeitdifferenz mit hoher Genauigkeit bestimmt werden.

Der Einfallswinkel des Sendesignals kann aus der Laufzeitdifferenz der von einem Sensorknoten mit mehreren räumlich separierten Antennen empfangenen Signale bestimmt werden.

Die von den Sensorknoten empfangenen Signalabschnitte eines Senders können Signalabschnitte mehrerer, auf unterschiedlichen Frequenzen abgestrahlter Sendesignale umfassen. Durch die höhere Bandbreite kann eine größere Genauigkeit bei der Bestimmung der Laufzeitdifferenz erreicht werden.

Die Bestimmung der Position des ersten Sensorknotens kann im ersten Sensorknoten erfolgen, wobei der zweite Sensorknoten die von ihm empfangenen Signalabschnitte der Sendesignale und die Einfallswinkel der Sendesignale an den ersten Sensorknoten übermittelt.

Die Sendesignale zur Positionsbestimmung können auch von den Sensorknoten selbst abgestrahlt werden.

Die Erfindung wird nachstehend anhand von Ausführungsbeispielen näher erläutert. Die beigefügten Zeichnungen stellen dar:

Figur 1   ein erfindungsgemäßes System mit einem Sensornetzwerk und zwei feststehenden Sendern,

Figur 2   die Vektorbeziehungen zwischen zwei Sensorknoten des Sensornetzwerks und

Figur 3   die virtuelle Bandbreitenerweiterung durch Nutzung mehrerer Signale eines Senders

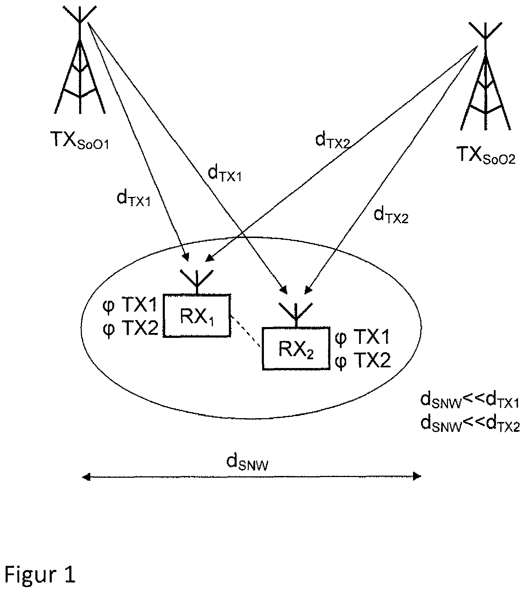

Figur 1 zeigt zwei Sensorknoten RX1 und RX2, die, wie durch die gestrichelte Linie angedeutet, kommunikativ miteinander verbunden sind und ein Sensornetzwerk SNW mit der Ausdehnung $d_{SNW}$ bilden. Das Sensornetzwerk kann noch weitere Sensorknoten aufweisen, die in Figur 1 nicht dargestellt sind. Die Sensorknoten können auch kommunikativ mit weiteren Knoten innerhalb oder außerhalb des Sensornetzwerkes verbunden sein. Weiterhin zeigt Figur 1 zwei feststehende Sender ($TX_{SoO1}$, $TX_{SoO2}$), die als Signals of Opportunity bezeichnete Signale abstrahlen. Die Entfernung beider Sender zum Sensornetzwerk SNW ist um ein Vielfaches größer als die Ausdehnung des Sensornetzwerkes.

Ein Sensorknoten umfasst einen beliebigen Sensor, eine Kommunikationseinheit bekannter Art zur Datenkommunikation mit einem oder mehreren weiteren Sensorknoten und/oder einem zentralen Knoten wie einem Server und einem Empfänger zum Empfang eines Signal of Opportunity. Der Sensorknoten kann zusätzlich einen Sender aufweisen. Empfänger und Sender können dabei gleichermaßen für die kommunikative Verbindung und die Positionsbestimmung genutzt werden.

Ein Sensor, der auch als Detektor, Messgrößenaufnehmer oder Messfühler bezeichnet wird, ist als ein technisches Bauteil zu verstehen, das bestimmte physikalische oder chemische Eigenschaften (z. B.: Wärmestrahlung, Temperatur, Feuchtigkeit, Druck, Schall, Helligkeit oder Beschleunigung) und/oder die stoffliche Beschaffenheit seiner Umgebung qualitativ oder als Messgröße quantitativ erfassen kann. Diese Größen werden mittels physikalischer oder chemischer Effekte erfasst und in ein weiterverarbeitbares elektrisches Signal umgeformt, das auch als Sensorsignal bezeichnet wird.

Zusätzlich kann der Sensorknoten noch Mittel zur Bestimmung des Einfallswinkels des Signal of Opportunity aufweisen, die nachfolgend noch genauer beschrieben werden.

Die Kommunikationseinheit bekannter Art kann beispielsweise drahtgebunden, mit Ethernet oder dergleichen oder auch drahtlos unter Nutzung von Technologien wie WLAN, GSM, UMTS, LTE oder dergleichen ausgeführt sein.

Für die nachfolgende exemplarische Beschreibung der Positionsbestimmung eines zweiten Sensorknotens relativ zu einem ersten Sensorknoten in einem Sensornetzwerk wird der zweite Sensorknoten als "Sensorknoten" und der erste Sensorknoten als "Ankerknoten" bezeichnet. Die Position des Ankerknoten ist dabei die Referenzposition für die Positionsbestimmung des zweiten Sensorknotens. Der Einfachheit halber wird für den Ankerknoten die Position (0,0) im Ursprung eines zweidimensionalen Koordinatensystems (x,y) angenommen.

In diesem Ausführungsbeispiel wird davon ausgegangen, dass die Bestimmung der Position im Sensorknoten erfolgt, wobei der Ankerknoten weitere Daten, die zur Positionsbestimmung im Sensorknoten erforderlich sind, an den Sensorknoten über eine Kommunikationsverbindung übermittelt. Gleichermaßen kann die Bestimmung der Position auch im Ankerknoten oder einem beliebigen anderen Knoten erfolgen, sofern die dazu erforderlichen Daten dorthin übermittelt werden.

Ist die Position des Ankerknotens in einem Koordinatensystem, wie beispielsweise einem geographischen Koordinatensystem wie WGS84 bekannt, kann anhand der Positionen der Sensorknoten relativ zum Ankerknoten die Position jedes Sensorknotens in diesem Koordinatensystem bestimmt werden.

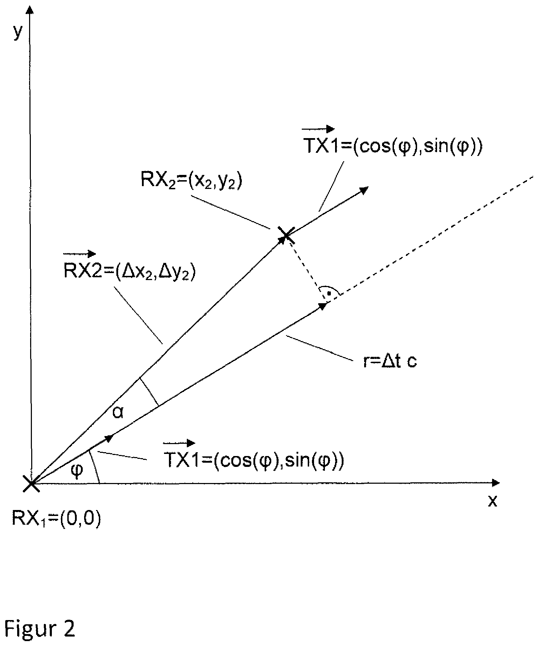

In Figur 2 sind der erste Sensorknoten als Ankerknoten $RX_1$ und der zweite Sensorknoten als Sensorknoten $RX_2$ dargestellt. Die x-y Koordinaten des Ankerknoten $RX_1$ sind $(x_1,y_1) = (0,0)$. Der Sensorknoten $RX_2$ hat die unbekannten Koordinaten $(x_2,y_2)$.

Der Ankerknoten $RX_1$ und der Sensorknoten $RX_2$ zeichnen für die Positionsbestimmung jeweils einen Abschnitt das Signal of Opportunity eines ersten Senders, beginnend an einem vordefinierten Zeitpunkt $t_1$, für eine vordefinierte Dauer $t_{RX}$ auf.

Anschließend übermittelt der Ankerknoten $RX_1$ den von ihm aufgezeichneten Abschnitt des Signal of Opportunity an den Sensorknoten $RX_2$. Anstelle des aufgezeichneten Abschnittes des Signal of Opportunity kann auch eine nach einer vordefinierten Regel bestimmte Metrik des aufgezeichneten Abschnittes des Signal of Opportunity mit zeitvarianten Eigenschaften übertragen werden. Als Metrik können beispielsweise die Phasenlage des empfangenen Signals, die Kanalimpulsantwort, Peak to Average Ratio oder bestimmte übertragene Informationen, wie die Position oder der Abstand von Pilotträgern im Sendesignal verwendet werden.

Anschließend bestimmt der Sensorknoten die Laufzeitdifferenz $\Delta t$ der vom Ankerknoten $RX_1$ und vom Sensorknoten $RX_2$ aufgezeichneten Signalabschnitte. Dies kann beispielsweise durch die Bestimmung des Maximums der Autokorrelationsfunktion beider Signalabschnitte erfolgen. Es ermöglicht eine besonders einfache Ausführung des Empfängers für das Signal of Opportunity, da der Empfänger lediglich einen Signalabschnitt bestimmter Länge des Signal of Opportunity aufzeichnen muss. Eine Decodierung, beispielsweise der übertragenen Nutzdaten, ist für die Positionsbestimmung nicht erforderlich.

Alternativ kann die Laufzeitdifferenz $\Delta t$ mit Hilfe einer oder mehrerer der oben genannten Metriken bestimmt werden.

Weiterhin bestimmt der Ankerknoten $RX_1$ den Einfallswinkel $\varphi$ des von ihm empfangenen Signal of Opportunity und übermittelt diesen an den Sensorknoten $RX_2$.

Die Laufzeitdifferenz $\Delta t$ der vom Ankerknoten $RX_1$ und vom Sensorknoten $RX_2$ aufgezeichneten Signalabschnitte ist proportional zur Entfernungsdifferenz zwischen den Sensorknoten und dem Standort des Senders des Signal of Opportunity. Die Laufzeitdifferenz $\Delta t$ lässt sich mit Hilfe der Lichtgeschwindigkeit c in eine Entfernungsdifferenz r umrechnen. Weiterhin lässt sich der Vektor TX1 in Richtung des Standortes des Standort des Senders des Signal of Opportunity als Einheitsvektor der Länge 1 darstellen und definieren als:

$$TX1 = \cos \varphi \ / \ \sin \varphi \tag{1}$$

Der Vektor RX2 vom Koordinatenursprung, d.h. vom Ankerknoten $RX_1$ in Richtung des Sensorknoten $RX_2$ wird definiert als

$$RX2 = \Delta x_2 \ / \ \Delta y_2 \tag{2}$$

mit $\Delta x_2$ als Entfernung $x_1 - x_2$ und $\Delta y_2$ als Entfernung $y_1 - y_2$.

Der Winkel $\alpha$ ist definiert als die Winkeldifferenz zwischen dem Einfallswinkel $\varphi$ des Signal of Opportunity und dem Winkel zwischen den Vektoren TX1 und RX2 bezogen auf das Koordinatensystem. Der Winkel $\alpha$ lässt sich mit Hilfe des Skalarprodukts berechnen:

$$\cos \alpha = (TX1 \cdot RX2) \ / \ (|TX1| \cdot |RX \ 2|) \tag{3}$$

Weiterhin gilt der Zusammenhang:

$$\cos \alpha = r \ / \ |RX2| = \Delta t_{TX1} \cdot c \ / \ |RX \ 2| \tag{4}$$

Durch Gleichsetzen der Formeln (3) und (4) und unter Berücksichtigung dass $|TX1| = 1$ ergibt sich:

$$\Delta t_{TX1} \cdot c = \Delta x_2 \cdot \cos \varphi + \Delta y_2 \cdot \sin \varphi \tag{5}$$

Formel (5) ist eine Gleichung mit zwei Unbekannten $\Delta x_2$ und $\Delta y_2$. Für die Bestimmung der Positionen des Sensorknoten relativ zum Ankerknoten ist daher die Auswertung eines zweiten Signals of Opportunity erforderlich. Die Anwendung der Formel (5) auf ein erstes Signal of Opportunity mit dem Vektor TX1, dem Einfallswinkel $\varphi_1$ und der Laufzeitdifferenz $\Delta t_{TX1}$ und ein zweites Signal of Opportunity mit dem Vektor TX1, dem Einfallswinkel $\varphi_2$ und der Laufzeitdifferenz $\Delta t_{TX2}$ ergibt ein lösbares lineares Gleichungssystem mit den Formeln (6) und (7), mit dem sich $\Delta x_2$ und $\Delta y_2$ und damit die Koordinaten $x_2$ und $y_2$ des Sensorknoten $RX_2$ bestimmen lassen:

$$\Delta t_{TX1} \cdot c = \Delta x_2 \cdot \cos \varphi_1 + \Delta y_2 \cdot \sin \varphi_1 \tag{6}$$

$$\Delta t_{TX2} \cdot c = \Delta x_2 \cdot \cos \varphi_2 + \Delta y_2 \cdot \sin \varphi_2 \tag{7}$$

Wie nachfolgend noch genauer beschrieben, bestimmen Ankerknoten und Sensorknoten den für die Bestimmung der Laufzeitdifferenz $\Delta t$ maßgeblichen vordefinierten Zeitpunkt $t_1$ und die Dauer $t_{RX}$ basierend auf der gleichen Referenzfrequenz. Damit kann die Dauer $t_{RX}$ als gleich angenommen werden, wohingegen die Zeitgeber im Ankerknoten und Sensorknoten einen Offset aufweisen können, d.h. bezogen auf eine Referenzzeit kann der Zeitpunkt $t_1$ im Anker-knoten und Sensorknoten unterschiedlich sein. Dieser Offset geht als Fehler in die Positionsbestimmung ein. Wird der Offset als Offset $\tau$ in der Formel (5) berücksichtigt, so ergibt sich:

$$(\Delta t_{TX1} - \tau) \cdot c = \Delta x_2 \cdot \cos \varphi + \Delta y_2 \cdot \sin \varphi \tag{8}$$

Formel (8) ist eine Gleichung mit drei Unbekannten $\Delta x_2$, $\Delta y_2$ und $\tau$. Mit der Auswertung von drei Signals of Opportunity wie vorgehend beschrieben, und Anwendung der Formel (8) auf drei Signals of Opportunity, ergibt sich ebenfalls ein lösbares Gleichungssystem, und es kann eine bessere Genauigkeit der Positionsbestimmung erreicht werden.

Ist, wie in Figur 1 dargestellt, die Entfernung der Sender der Signals of Opportunity um ein Vielfaches größer als die Ausdehnung des Sensornetzwerkes, kann der Einfallswinkel φ an jedem Sensorkoten als gleich angenommen werden. Dies ermöglicht eine kostengünstige Ausführung der Sensorknoten, da der Einfallswinkel φ für ein Signal of Opportunity lediglich durch einen der Sensorknoten im Sensornetzwerk, beispielsweise den Ankerknoten, bestimmt werden muss. Eine Differenz Δφ des Einfallswinkels des Signal of Opportunity am Sensorknoten kann ebenfalls in Formel (5) berücksichtigt werden, so dass sich ergibt:

$$\Delta t_{TX1} \cdot c = \Delta x_2 \cdot \cos(\varphi + \Delta\varphi) + \Delta y_2 \cdot \sin(\varphi + \Delta\varphi) \qquad (9)$$

Formel (9) ist eine Gleichung mit drei Unbekannten $\Delta x_2$, $\Delta y_2$ und $\Delta\varphi$. Mit der Auswertung von drei Signals of Opportunity wie vorgehend beschrieben, und Anwendung der Formel (9) auf drei Signals of Opportunity, ergibt sich ebenfalls ein lösbares Gleichungssystem, und es kann eine bessere Genauigkeit der Positionsbestimmung erreicht werden.

Der Einfallswinkel des Signal of Opportunity an einem Sensorknoten kann mit verschiedenen bekannten Verfahren bestimmt werden. Eine Möglichkeit ist der Empfang des Signal of Opportunity mit mehreren am Standort des Sensorknotens mit definierten Abständen räumlich separierten Antennen und die bereits beschriebenen Bestimmung der Laufzeitdifferenzen des Signal of Opportunity zwischen den Antennen. Auf Basis der bekannten Antennenabstände und der Laufzeitdifferenz kann der Einfallswinkel des Signal of Opportunity bestimmt werden. Mit drei räumlich separierten Antennen am Standort des Sensorknotens kann der Einfallswinkel des Signal of Opportunity eindeutig, das heißt mit einem Eindeutigkeitsbereich von 360 Grad bestimmt werden.

Mit zwei räumlich separierten Antennen am Standort des Sensorknotens kann der Einfallswinkel des Signal of Opportunity mit einem Eindeutigkeitsbereich von 180 Grad bestimmt werden. Durch eine geeignete statistische Auswertung der von mehreren Sensorknoten bestimmten Einfallswinkel des Signals of Opportunity kann der Eindeutigkeitsbereich bis auf 360 Grad erweitert werden. Dazu können die Sensorknoten ausbildet sein, die gemessenen Einfallswinkel des Signal of Opportunity untereinander auszutauschen.

Alternativ kann der Einfallswinkel des Signal of Opportunity mit einem Antennenarray bestimmt werden.

Bei Kenntnis der Senderstandorte des Signal of Opportunity und einer geschätzten Position der Sensorknoten, beispielsweise wenn eine Position innerhalb der Ausdehnung des Sensornetzwerkes bekannt ist, kann der Einfallswinkel auch direkt berechnet oder in einer Datenbank hinterlegt werden.

Für eine hohe Genauigkeit der Positionsbestimmung der Sensorknoten im Sensornetzwerk ist es erforderlich, dass die Sensorknoten frequenzsynchronisiert sind, d.h. wenn die bereits erwähnten Zeitpunkte $t_1$, sowie die Zeitdauer $t_{RX}$ durch die Sensorknoten mit Bezug auf eine bestimmte Referenzfrequenz bestimmt werden. Wie Formel (8) zeigt, können Differenzen der Zeitpunkte $t_1$ bei der Aufzeichnung der Abschnitte des Signal of Opportunity in den Sensorknoten kompensiert werden, sofern die Zeitdauer Dauer $t_{RX}$ in den Sensorknoten mit Bezug auf die gleiche Referenzfrequenz bestimmt wird. Das heißt, dass die Sensorknoten für die Bestimmung von zumindest $t_{RX}$ die gleiche Zeitbasis, beispielweise die gleiche Referenzfrequenz verwenden sollten.

Diese Referenzfrequenz kann beispielsweise durch die Sensorknoten aus dem Signal of Opportunity gewonnen werden und zur Korrektur einer im Sensorknoten generierten lokalen Referenzfrequenz verwendet werden. Die bereits erwähnten als Signal of Opportunity geeigneten Fernseh- oder Rundfunksignale (DVB-T, DAB) oder auch Signale von Kommunikationsnetzen (GSM, UMTS, LTE) werden üblicherweise in Bezug auf eine hochpräzise Referenzfrequenz erzeugt. Nachfolgend sei die Erzeugung eines Frequenzreferenzsignals am Beispiel eines OFDM (orthogonales Frequenzmultiplex-Verfahren) modulierten Signal of Opportunity beschrieben, wie es beispielweise für digitalen terrestrischen Fernsehempfang (DVB-T) verwendet wird.

Ein OFDM moduliertes Signal besteht aus einer Vielzahl von schmalbandigen Einzelträgern mit konstantem Frequenzabstand, wobei die Einzelträger wiederum mit einem Modulationsverfahren wie Quadraturphasenumtastung (QPSK) oder Quadraturamplitudenmodulation mit 16 oder 64 Symbolen (16-QAM oder 64-QAM) moduliert sind. Bei der Erzeugung eines OFDM modulierten Signals wird für die Generierung des Abtasttaktes und die Erzeugung der Trägerfrequenz die gleiche, hochgenaue Referenzfrequenz verwendet. Bestimmte Einzelträger werden mit einer bekannten, vorgegebenen Symbolsequenz moduliert. Derart modulierte Einzelträger werden auch als Pilotträger und die entsprechende Symbolsequenz auch als Pilotsignal bezeichnet. In der zeitlichen Abfolge des Sendesignals wird das Pilotsignal auf einem Teil der Einzelträger kontinuierlich übertragen. Diese Einzelträger werden auch als Pilotträger bezeichnet. Zusätzlich übertragen weitere Einzelträger periodisch anstelle der Nutzdaten das Pilotsignal. Durch eine Korrelation des empfangenen Signals mit der bekannten Symbolsequenz des Pilotsignals kann die Phasen- und Frequenzlage der Pilotträger bestimmt werden.

Empfänger für OFDM modulierte Signale bestimmen die Trägerfrequenz des OFDM Signals beziehungsweise die Trägerfrequenzen der Einzelträger sowie die Abtastrate zur Abtastung des Signals ebenfalls mit Bezug auf eine lokale Referenzfrequenz. Frequenzabweichungen der lokalen Referenzfrequenz des Empfängers im Vergleich zur Referenzfrequenz des Senders führen zu einer Trägerfrequenzverschiebung (Carrier Frequency Offset, CFO) und/oder zu einem Abtastratenfehler (Sampling Clock Offset, SFO) des empfangenen Signals. Eine Trägerfrequenzverschiebung bringt eine konstanten Phasenverschiebung auf allen Einzelträgern zwischen zwei zeitlich aufeinander folgenden Symbolen mit sich. Ein Abtastratenfehler führt zu einer linear ansteigenden oder abfallenden Phasenverschiebung der Einzelträger zueinander. Aus der Größe der Phasenverschiebungen kann ein Korrektursignal abgeleitet werden, mit dem die Referenzfrequenz des Empfängers korrigiert wird. Dies kann beispielsweise mittels einer Regelschleife geschehen.

Bei einem Empfänger in Bewegung tritt zusätzlich noch Dopplerfrequenzverschiebung des empfangenen Signals auf, so dass der Empfänger die Trägerfrequenzverschiebung und den Abtastratenfehler unabhängig voneinander ermitteln und kompensieren muss. Bei einem unbeweglichen Empfänger kann davon ausgegangen werden, dass Trägerfrequenzverschiebung und Abtastratenfehler gleichermaßen durch eine Differenz der Referenzfrequenzen von Sender und Empfänger verursacht werden. Dies ermöglicht eine Synchronisation der lokalen Referenzfrequenz des Empfängers auf die Referenzfrequenz des Senders basierend auf der durch den Empfänger ermittelten Trägerfrequenzverschiebung oder des Abtastratenfehlers oder der Kombination von Trägerfrequenzverschiebung und Abtastratenfehler.

Die durch Trägerfrequenzverschiebung und Abtastratenfehler verursachten Phasenverschiebungen können beispielsweise für die kontinuierlich übertragenen Pilotträger durch eine Korrelation des empfangenen Signals mit der bekannten Symbolsequenz der Pilotträger bestimmt werden. Eine weitere Möglichkeit ist eine Korrelation aktuell empfangener OFDM Symbole mit den einem Symbolschritt zuvor empfangenen OFDM Symbolen. Dabei kann eine Phasendifferenz beispielsweise als Differenz der Phasen zweier aufeinanderfolgender Symbole bestimmt werden. Dieses bietet eine verbesserte Genauigkeit, da hierbei alle Einzelträger mit berücksichtigt werden. Die Bestimmung von Trägerfrequenzverschiebung und Abtastratenfehler kann in beiden Fällen mittels bekannter Schätzverfahren erfolgen.

Eine weitere Verbesserung der Genauigkeit der Bestimmung von Trägerfrequenzverschiebung und Abtastratenfehler kann erreicht werden, indem das empfangene Signal demoduliert und unter Nutzung der lokalen Referenzfrequenz nach dem gleichen Verfahren wie das Sendesignal wiederum moduliert wird. Die so gewonnene Kopie des Sendersignals wird mit dem empfangen Signal verglichen, um Abweichungen der Phasenlage der Einzelträger zu bestimmen.

Wie bereits vorgehend beschrieben, wird die Laufzeitdifferenz $\Delta t$ der vom Ankerknoten $RX_1$ und vom Sensorknoten $RX_2$ aufgezeichneten Signalabschnitte des Signals of Opportunity durch die Bestimmung des Maximums der Autokorrelationsfunktion beider Signalabschnitte ermittelt. Die erreichbare Genauigkeit P der aus der Laufzeitdifferenz bestimmten Entfernung ist im Wesentlichen von der Bandbreite B der korrelierten Signale abhängig und kann angegeben werden als:

$$P = c / B \cdot 100 \qquad\qquad\qquad (10)$$

Ein einzelnes DVB-T Signal hat beispielsweise eine Bandbreite von 8 MHz. Bei einem DVB-T Signal belegen die Pilotträger die äußeren Einzelträger, so dass die Differenz der höchsten und niedrigsten Pilotträgerfrequenz der Bandbreite des DVB-T Signals entspricht. Durch ihr gutes Signal zu Rauschverhältnis bestimmen Anzahl und Lage der Pilotträger wesentlich die Ausprägung des Maximums der Autokorrelationsfunktion. Wesentlich für die Genauigkeit P sind die Anzahl der Pilotträger im Signalabschnitt und die maximalen Abstände der Pilotträger. Mit einem DVB-T Signal der Bandbreite von 8 MHz als Signal of Opportunity beträgt die erreichbare Genauigkeit P 37,5 cm.

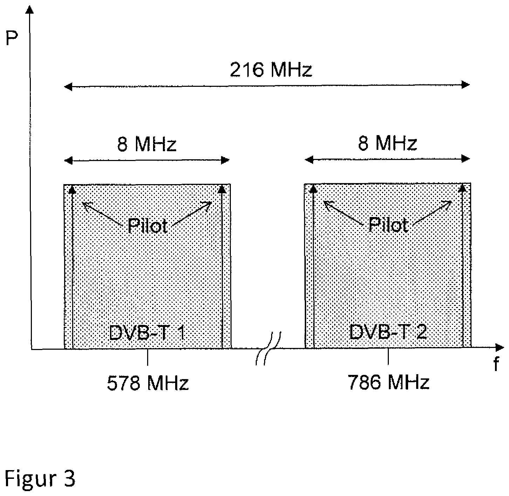

Üblicherweise werden von einem Standort eines DVB-T Senders mehrere Sendesignale auf unterschiedlichen Frequenzen abgestrahlt, die aus der gleichen hochgenauen Referenzfrequenz erzeugt werden, und in einem starren Phasenverhältnis zueinander stehen. In Figur 3 sind beispielhaft zwei solche DVB-T Signale dargestellt.

Die Genauigkeit P kann weiter verbessert werden, indem Signalabschnitte zweier solcher, von einem gemeinsamen Standort abgestrahlter Signale miteinander korreliert werden. Die für die Formel (10) anzusetzende Bandbreite B entspricht der Differenz der höchsten und niedrigsten Pilotträgerfrequenz beider Signale. Im dem in Figur x dargestellten Beispiel ergibt sich B zu 216 MHz und die erreichbare Genauigkeit P zu 1,4 cm.

In einer weiteren Ausführungsform verwenden die Sensorknoten das Signal of Opportunity lediglich zur Generierung der Referenzfrequenz. Das zur Positionsbestimmung verwendete Signal of Opportunity wird in dieser Ausführungsform vom Sensorknoten abgestrahlt. Dazu weisen die Sensorknoten einen geeigneten Sender und Empfänger auf. Weiterhin weist jeder Sensorknoten die bereits beschriebenen Mittel zur Bestimmung des Einfallswinkels dieses Signal of Opportunity auf. Beispielsweise kann eine im Sensorknoten vorhandene drahtlose Kommunikationseinheit nach dem Standard IEEE 802.11 als Sender und Empfänger für diesen Zweck verwendet werden. Die Positionsbestimmung erfolgt mit dem bereits beschriebenen Verfahren. In einer Weiterbildung des Verfahrens bestimmt zumindest ein Sensorknoten die Referenzfrequenz anhand empfangener Signals of Opportunity von einem Sender außerhalb des Sensornetzwerkes, beispielsweise einem DVB-T Sender und nutzt diese Referenzfrequenz als Referenzfrequenz für seinen Sender und Empfänger nach dem Standard IEEE 802.11. Die anderen Sensorknoten im Sensornetzwerk verwenden das von dem Sensorknoten abgestrahlte Signal nach dem Standard IEEE 802.11 und bestimmen die Referenzfrequenz aus diesem Signal.

**Patentansprüche**

1. Verfahren zur Bestimmung der Position eines ersten Sensorknotens ($RX_1$) relativ zu einem zweiten Sensorknoten ($RX_2$), wobei der erste und der zweite Sensorknoten kommunikativ miteinander verbunden sind und Bestandteil eines Sensornetzwerkes sind, mit den Verfahrensschritten:

   - Empfang von Signalabschnitten von OFDM modulierten Sendesignalen zumindest zweier Sender ($TX_{SoO1}$, $TX_{SoO2}$) durch den ersten und den zweiten Sensorknoten, beginnend zu einem Zeitpunkt $t_1$ für eine Zeitdauer $t_{RX}$;
   - Bestimmung der Einfallswinkel der Sendesignale zu zumindest einem der Sensorknoten;
   - Bestimmung der Entfernung zwischen den Sensorknoten aus den Laufzeitdifferenzen der an dem ersten und zweiten Sensorknoten empfangenen Sendesignale der zumindest zwei Sender;
   - Bestimmung der Position des ersten Sensorknotens ($RX_1$) relativ zum zweiten Sensorknoten ($RX_2$) aus der Entfernung zwischen den Sensorknoten und den Einfallswinkeln der Sendesignale, wobei

   die Sensorknoten den Zeitpunkt $t_1$ und die Zeitdauer $t_{RX}$ in Bezug auf eine Referenzfrequenz bestimmen, die aus dem vom jeweiligen Sensorknoten empfangenen OFDM modulierten Sendesignal zumindest eines der Sender ($TX_{SoO1}$, $TX_{SoO2}$) abgeleitet wird, wobei die Sensorknoten die Referenzfrequenz mittels eines aus dem OFDM modulierten Sendesignal gewonnenen Korrektursignal bestimmen und wobei die Bestimmung der Position des ersten Sensorknotens im ersten Sensorknoten erfolgt und der zweite Sensorknoten die von ihm empfangenen Signalabschnitte der Sendesignale und die Einfallswinkel der Sendesignale an den ersten Sensorknoten übermittelt.

2. Verfahren nach Anspruch 1, **dadurch gekennzeichnet, dass** die Sensorknoten das Korrektursignal durch einen Phasenvergleich von zumindest zwei Einzelträgern des Sendesignals bestimmen.

3. Verfahren nach Anspruch 1 oder 2, **dadurch gekennzeichnet, dass** die Sensorknoten das Korrektursignal durch Auswertung der Phasendifferenz bestimmen.

4. Verfahren nach einem der Ansprüche 1 bis 3, **dadurch gekennzeichnet, dass** die Sensorknoten das Korrektursignal durch einen Phasenvergleich eines Einzelträgers des Sendesignals mit einem unmittelbar zuvor empfangenen Einzelträger des Sendesignals bestimmen.

5. Verfahren nach einem der Ansprüche 1 bis 4, **dadurch gekennzeichnet, dass** die Sensorknoten das Korrektursignal durch einen Vergleich des Sendesignals mit einem Signal bestimmen, dass durch Modulation des demodulierten Sendesignals generiert wurde.

6. Verfahren nach einem der vorgehenden Ansprüche, **dadurch gekennzeichnet, dass** die Laufzeitdifferenz als das Maximum der Autokorrelationsfunktion der vom ersten und zweiten Sensorknoten empfangenen Signalabschnitte des Sendesignals bestimmt wird.

7. Verfahren nach einem der vorgehenden Ansprüche, **dadurch gekennzeichnet, dass** das Sendesignal von einen Sensorknoten mit mehreren räumlich separierten Antennen empfangen wird und der Einfallswinkel des Sendesignals durch aus der Laufzeitdifferenz der empfangenen Signale bestimmt wird.

8. Verfahren nach einem der vorgehenden Ansprüche, **dadurch gekennzeichnet, dass** die empfangenen Signalabschnitte eines Senders Signalabschnitte mehrerer, auf unterschiedlichen Frequenzen abgestrahlter Sendesignale umfassen.

9. Verfahren nach einem der vorgehenden Ansprüche, **dadurch gekennzeichnet, dass** die Sendesignale von Sensorknoten abgestrahlt werden.

10. System mit einem Sensornetzwerk und mindestens zwei Sendern, die ein OFDM moduliertes Sendesignal abstrahlen, wobei das Sensornetzwerk mindestens einen ersten und einen zweiten Sensorknoten die kommunikativ miteinander verbunden sind jeweils eine Sende-Empfangseinrichtung aufweisen, wobei die Sensorknoten, ausgebildet sind, das Verfahren nach einem der vorgehenden Ansprüche auszuführen.

## Claims

1. A method for determining the position of a first sensor node ($RX_1$) relative to a second sensor node (RX2), wherein the first and the second sensor nodes are communicatively connected to one another and are a constituent part of a sensor network, having the method steps:

   receiving signal segments of OFDM-modulated transmitted signals from at least two transmitters ($TX_{SoO1}$, $TX_{SoO2}$) by the first and the second sensor nodes, beginning at a time $t_1$ for a time period $t_{RX}$;
   determining the angle of incidence of the transmitted signals to at least one of the sensor nodes;
   determining the distance between the sensor nodes from the propagation time differences of the transmitted signals of the at least two transmitters received at the first and second sensor nodes;
   determining the position of the first sensor node ($RX_1$) relative to the second sensor node ($RX_2$) from the distance between the sensor nodes and the angle of incidence of the transmitted signals,
   wherein the sensor nodes determine the time $t_1$ and time period $t_{RX}$ relative to a reference frequency that is derived from the OFDM-modulated transmitted signal of at least one of the transmitters ($TX_{SoO1}$, $TX_{SoO2}$) received by the respective sensor node, wherein the sensor nodes determine the reference frequency by means of a correction signal obtained from the OFDM-modulated transmitted signal and wherein
   that the position of the first sensor node is determined in the first sensor node, and the second sensor node transmits the signal segments of the transmitted signals it received and the angle of incidence of the transmitted signals to the first sensor node.

2. The method according to claim 1, **characterized in that** the sensor nodes determine the correction signal using a phase comparison of at least two individual carriers of the transmitted signal.

3. The method according to claim 1 or 2, **characterized in that** the sensor nodes determine the correction signal by evaluating the phase difference.

4. The method according to any of claims 1 through 3, **characterized in that** the sensor nodes determine the correction signal using a phase comparison of an individual carrier of the transmitted signal with an immediately previously received individual carrier of the transmitted signal.

5. The method according to any of claims 1 through 4, **characterized in that** the sensor nodes determine the correction signal using a comparison of the transmitted signal with a signal that was generated by modulating the demodulated transmitted signal.

6. The method according to any of the preceding claims, **characterized in that** the propagation time difference is determined as the maximum of the autocorrelation function of the signal segments of the transmitted signal received by the first and second sensor nodes.

7. The method according to any of the preceding claims, **characterized in that** the transmitted signal is received by a sensor node with a plurality of spatially separated antennas and the angle of incidence of the transmitted signal is determined from the propagation time difference of the received signals.

8. The method according to any of the preceding claims, **characterized in that** the received signal segments of a transmitter comprise signal segments of a plurality of transmitted signals emitted at different frequencies.

9. The method according to any of the preceding claims, **characterized in that** the transmitted signals are emitted by sensor nodes.

10. A system having a sensor network and at least two transmitters that emit an OFDM-modulated transmitted signal, wherein the sensor network has at least a first and a second sensor node that are communicatively connected to one another and each of which has a transmitter/receiver device, wherein the sensor nodes are configured to execute the method according to the preceding claims.

**Revendications**

1. Méthode pour déterminer la position d'un premier nœud de capteur (RX1) par rapport à un second nœud de capteur (RX2), les premier et second nœuds de capteur étant reliés entre eux de façon communicante et faisant partie d'un réseau de capteurs, comprenant les étapes de la méthode ci-après :

   Réception de sections de signaux de signaux d'émission modulés OFDM d'au moins deux émetteurs (TXSoO1, TXSoO2) par le premier et le second nœuds de capteur, commençant à un instant t1 et pendant une période tRX ;
   Détermination des angles d'incidence des signaux d'émission pour au moins l'un des nœuds du capteur ;
   Détermination de la distance entre les nœuds de capteurs à partir des différences de temps de transit des signaux d'émission des au moins deux émetteurs reçus aux premier et second nœuds de capteurs ;
   Détermination de la position du premier nœud de capteur (RX1) par rapport au second nœud de capteur (RX2) à partir de la distance entre les nœuds de capteur et des angles d'incidence des signaux d'émission,
   les nœuds de capteur déterminant l'instant t1 et la durée tRX par rapport à une fréquence de référence dérivée du signal d'émission modulé OFDM reçu par le nœud de capteur respectif depuis au moins un des émetteurs (TXSoO1, TXSoO2), les nœuds de capteur déterminant la fréquence de référence au moyen d'un signal de correction obtenu depuis le signal de transmission modulé OFDM et
   la position du premier nœud de capteur étant déterminée dans le premier nœud de capteur et le second nœud de capteur transmettant au premier nœud de capteur les sections de signal des signaux d'émission reçues et les angles d'incidence des signaux d'émission.

2. Méthode selon la revendication 1, **caractérisée en ce que** les nœuds de capteur déterminent le signal de correction par une comparaison des phases d'au moins deux porteuses individuelles du signal d'émission.

3. Méthode selon la revendication 1 ou 2, **caractérisée en ce que** les nœuds de capteur déterminent le signal de correction par l'analyse de la différence de phase.

4. Méthode selon l'une quelconque des revendications 1 à 3, **caractérisée en ce que** les nœuds de capteur déterminent le signal de correction par une comparaison des phases d'une porteuse individuelle du signal d'émission à une porteuse individuelle du signal d'émission reçue immédiatement auparavant.

5. Méthode selon l'une quelconque des revendications 1 à 4, **caractérisée en ce que** les nœuds de capteur déterminent le signal de correction par une comparaison du signal d'émission à un signal généré par modulation du signal d'émission transmis.

6. Méthode selon l'une quelconque des revendications précédentes, **caractérisée en ce que** la différence de temps de parcours est déterminée en tant que maximum de la fonction d'autocorrélation des sections de signal du signal d'émission reçu par les premier et second nœuds de capteur.

7. Méthode selon l'une quelconque des revendications précédentes, **caractérisée en ce que** le signal d'émission est reçu par un nœud de capteur ayant une pluralité d'antennes spatialement séparées et que l'angle d'incidence du signal d'émission est déterminé à partir de la différence de parcours temps des signaux reçus.

8. Méthode selon l'une quelconque des revendications précédentes, **caractérisée en ce que** les sections de signal reçues depuis un émetteur comprennent des sections de signal d'une pluralité de signaux émis à différentes fréquences.

9. Méthode selon l'une quelconque des revendications précédentes, **caractérisée en ce que** les signaux d'émission sont émis par des nœuds de capteur.

10. Système comprenant un réseau de capteurs et au moins deux émetteurs émettant un signal d'émission modulé OFDM, le réseau de capteurs comprenant au moins un premier et un second nœud de capteur étant reliés entre eux de façon communicante et possédant chacun un dispositif émetteur et récepteur, les nœuds de capteur étant conçus pour exécuter la méthode selon l'une quelconque des revendications précédentes.

Figur 1

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6861984 B2
- US 8063825 B1